(19) Europäisches Patentamt

European Patent Office

Office européen des brevets

(11) **EP 1 217 613 A1**

(12) **DEMANDE DE BREVET EUROPEEN**

(43) Date de publication:
**26.06.2002 Bulletin 2002/26**

(51) Int Cl.⁷: **G10L 19/00**

(21) Numéro de dépôt: **01204796.5**

(22) Date de dépôt: **11.12.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **19.12.2000 FR 0016592**

(71) Demandeur: **Koninklijke Philips Electronics N.V.
5621 BA Eindhoven (NL)**

(72) Inventeur: **Miet, Gilles
75008 Paris (FR)**

(74) Mandataire: **Chaffraix, Jean
Société Civile S.P.I.D.
156, Boulevard Haussmann
75008 Paris (FR)**

(54) **Reconstitution de trames manquantes ou mauvaises en téléphonie cellulaire**

(57) Cet appareil (1) est destiné à être raccordé à un réseau de téléphonie cellulaire transmettant des données par trames (HTR). Cet appareil comporte un dispositif de reconstitution de données (30) déclenché par un signal (BFR) indicateur de mauvaises données reçues d'une trame afin de reconstituer cette trame. Les données sont reconstituées au moyen de formes d'onde établies sur des données précédentes correctement reçues. La trame est reconstituée en copiant autant de fois que nécessaire la forme d'onde estimée ($w^{est}_i$),
Application à la téléphonie cellulaire.

HTR

FIG.5

EP 1 217 613 A1

## Description

L'invention concerne un appareil comportant un dispositif de réception pour recevoir des données, muni d'un dispositif de détection de mauvaises données pour fournir un signal indicateur de mauvaises données et d'un dispositif de reconstitution de données déclenché par ledit signal indicateur pour reconstituer les mauvaises données.

L'invention concerne aussi un procédé pour reconstituer des données jugées mauvaises.

Un tel appareil est connu du document de brevet des Etats-Unis d'Amérique n° 5 907 822. Dans ce document il est proposé de reconstituer une trame de signaux de parole, lorsque celle-ci est estimée erronée ou inapte à engendrer un signal convenable. Cette reconstitution est effectuée sur la base de paramètres de décodage des données de trame qui sont donc liés à la nature du système de décodage.

La présente invention propose un appareil du genre mentionné dans le préambule qui reconstitue les trames jugées défectueuses d'une manière indépendante du décodeur.

Pour cela, un tel appareil est remarquable en ce que le dispositif de reconstitution comporte des moyens pour constituer des formes d'ondes à partir des données précédentes reçues et pour reconstituer des données manquantes par extrapolation desdites formes d'onde.

L'idée de l'invention consiste donc à utiliser des formes d'ondes qui décrivent bien le message sonore. Cette utilisation de forme d'onde, bien adaptée à la parole et aussi à la musique est particulièrement appréciée par l'utilisateur, pour lequel les données ainsi reconstituées peuvent ainsi passer inaperçues.

La description suivante, faite en regard des dessins ci-annexés, le tout donné à titre d'exemples non limitatifs fera bien comprendre comment l'invention peut être réalisée. Sur les dessins :

La figure 1 montre un appareil conforme à l'invention,
La figure 2 montre un schéma du dispositif de reconstitution de trame,
La figure 3 montre un premier diagramme temps montrant le traitement des formes d'ondes correctement reçues,
La figure 4 montre un deuxième diagramme temps montrant la préparation de la forme d'onde utilisable pour la reconstitution de la trame,
La figure 5 montre un troisième diagramme temps montrant la reconstitution de la trame jugée mauvaise.

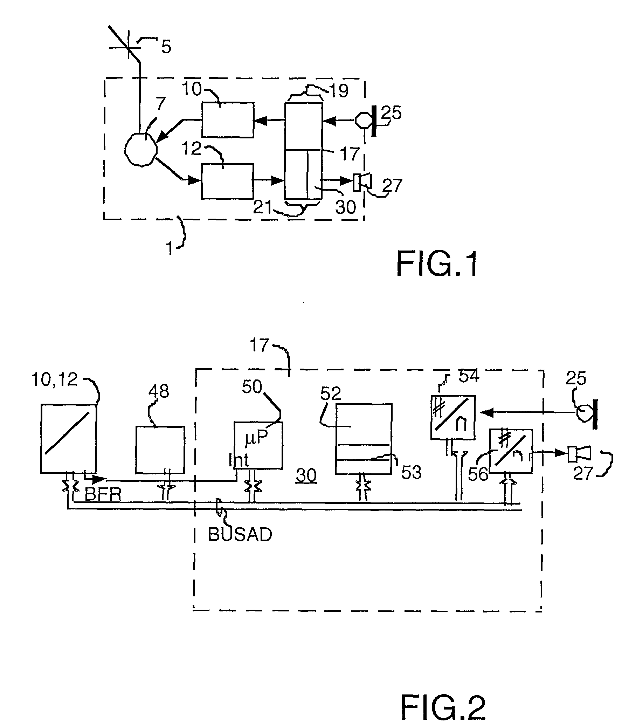

A la figure 1, on a représenté un appareil 1 conforme à l'invention. C'est un appareil de radiotéléphonie mobile cellulaire qui répond aux normes GSM ou UMTS, par exemple. Il se compose d'une antenne 5 pour émettre et recevoir des signaux radioélectriques. Cette antenne 5 est couplée via un duplexeur 7 à une partie émission 10 et une partie réception 12. Les signaux acoustiques, se présentant sous forme de trames, sont traités dans un ensemble de traitement de signaux acoustiques 17 constitué par un système de codage 19 et un système de décodage 21. Ces systèmes sont respectivement reliés à un microphone 25 et un écouteur 27. L'ensemble 17 pouvant incorporer un système de reconstitution de trames 30.

La figure 2 montre un schéma du dispositif de reconstitution de trames 17 qui utilise des éléments pour d'autres fonctions. Ce dispositif traite donc, entre autres les signaux de parole fournis par le décodeur 48. Ce dispositif 17 est bâti autour d'un processeur 50 auquel est adjoint de la manière habituelle un ensemble de mémoire 52 contenant, d'une part, le programme qui met en oeuvre les mesures préconisées par l'invention et, d'autre part, des données fixes et variables que nécessite ce programme. Une partie 53 de cette mémoire est destinée à contenir des échantillons de parole provenant du décodeur 17 et autres données utiles pour la reconstitution de trames. Les données traitées ainsi sont véhiculées via une ligne commune de différentes données BUSAD. Un convertisseur analogique-numérique 54 convertit les signaux fournis par le microphone 25 et un convertisseur numérique-analogique 56 fournit des signaux acoustiques à l'écouteur 27. Tous ces éléments sont connectés par l'intermédiaire de la ligne BUSAD aux parties 10 et 12. On notera que la partie réception fournit un signal BFR indiquant, lorsqu'il est actif, qu'une trame de signaux reçus est mauvaise. Ce signal est appliqué à une entrée d'interruption Int du processeur 50 pour déclencher un traitement que propose l'invention. Notamment, les normes GSM imposent d'effectuer un mesure de la qualité des trames reçues et le signal BFR est donc fourni dans tous les appareils satisfaisant à cette norme.

Selon l'invention, une trame réputée mauvaise sera reconstituée à partir de l'analyse des derniers échantillons reçus et considérés de bonne qualité. Ces derniers échantillons sont analysés en tant que formes d'ondes.

Les principes de l'invention sont basés sur les considérations suivantes.

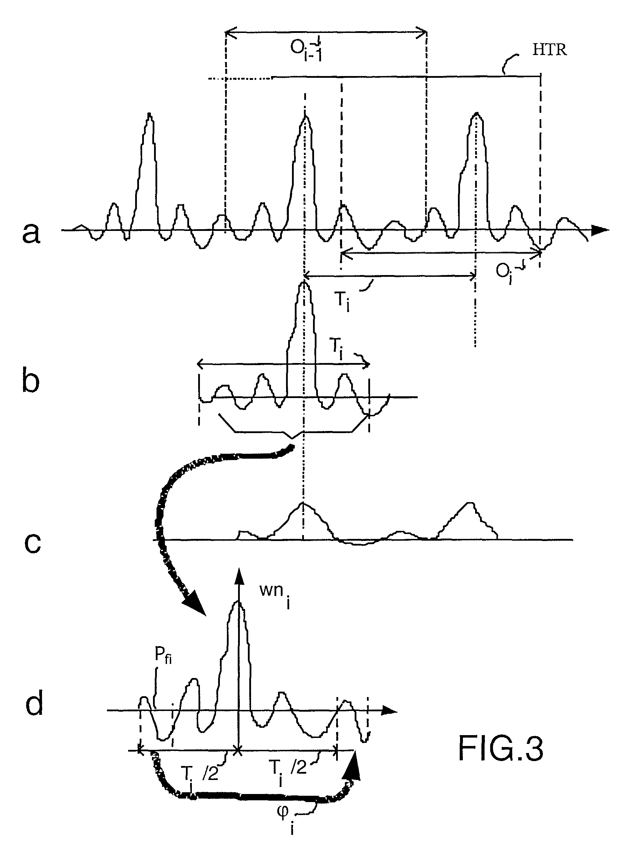

La figure 3 montre un diagramme explicitant l'invention.

La ligne « a » de cette figure montre l'allure du signal de parole, stocké sous forme d'échantillons numériques aux emplacements de mémoires 53. Ce signal est élaboré par le décodeur 48.

Lorsqu'une mauvaise trame arrive à l'entrée du décodeur, le signal stocké dans l'hypertrame (HTR) composée de plusieurs bonnes trames est extrait (ligne « a »).

Il est ensuite observé périodiquement durant des fenêtres temps. Sur la figure, on a représenté les fenêtres $O_i$ et $O_{i-1}$. L'apparition de ces fenêtres est périodique mais elle est souvent différente du rythme des trames (cela peut être à une cadence 3 fois inférieure à 5 fois supérieure en fonction du décodeur 48). Mais on se débrouille pour que la fin de la dernière fenêtre $O_i$ de bonnes données coïncide avec la fin de l'Hypertrame HTR représentée. Durant ces temps $O_i$ on prélève le signal de parole et l'on constitue ainsi un signal $w_i$ dont l'allure est montrée à la ligne « b ». On effectue une corrélation de ce signal prélevé jusqu'à obtenir un pic de corrélation, ce qui est montré à la ligne « c ». Ce maximum de corrélation sur des échantillons passés survient après un décalage temporel $T_i$. Ce temps $T_i$ donne une valeur de la période au moment considéré du signal de parole. Ceci peut s'écrire :

$$\mathrm{N}_i = \arg\max_N \left\{ \sum_{k=0}^{R-1} w_i(k) * w_i(k-N) \right\} \text{ avec } \mathrm{N} < \mathrm{N}_{\text{corr}} \qquad (1)$$

$N_{\text{corr}}$ est la limite en profondeur de la corrélation.
R étant le nombre d'échantillons contenus dans la fenêtre $O_i$.
On définit ensuite une forme d'onde basée sur cette période. Le signal est extrait sur une période, à l'intérieur de la fenêtre d'observation $O_i$ comme indiqué ligne « b ». Puis il est rendu périodique :

$$\forall m \in Z, \forall k \in [0..K-1], \tilde{w}_i(k+m.K) = w_i(k+\varepsilon), \text{ avec } K = T_i.Fe \qquad (2)$$

On fait toutefois attention à ce que les extrémités du signal soient de faible amplitude afin de ne pas créer de discontinuité entre ses extrémités (petit décalage supplémentaire $\varepsilon$ de quelques échantillons). Ce signal est ensuite normalisé temporellement (formule (2)) sur une période de référence. Dans le cadre de l'exemple décrit, on prend une période maximale $T_{\text{max}}$ c'est-à-dire que les longueurs des formes d'ondes attendues sont supposées ne pas dépasser cette valeur.

$$\tilde{w}n_i(k) = \tilde{w}_i\left( k \cdot \frac{T_i}{T_{\text{max}}} \right) \qquad (3)$$

Puis il est décalé afin d'être le plus proche de la forme d'onde précédente $wn_{i-1}$ comme indiqué formule (4)

$$\varphi_i = \frac{2\pi}{Fe \cdot T_{\text{max}}} \cdot \arg\max_N \left\{ \sum_{k=0}^{K-1} wn_{i-1}(k) * \tilde{w}n_i(k+N) \right\} \qquad (4)$$

Exemple ligne « d », où la partie d'échantillons $P_{\varphi i}$ située après le temps $T_i/2$ est mise avant les échantillons de la fenêtre $O_i$ afin de coller au mieux à la forme d'onde précédente qui avait son maximum au centre de la fenêtre normalisée (ligne « c »).
Cette forme d'onde $wn_i$ peut donc s'écrire :

$$wn_i(k) = \tilde{w}n_i\left( k + \frac{\varphi_i}{2\pi} \cdot T_{\text{max}} \cdot Fe \right) \qquad (5)$$

Fe étant la fréquence des échantillons constituant les différents signaux,
$\varphi_i$ définissant le déphasage de ladite partie $P_{\varphi i}$.
Elle est ensuite emmagasinée tout comme un certain nombre d'entre elles dans ladite partie de mémoire 53. Il en de même pour les différents $T_i$ ainsi que les $\varphi_i$.
Selon une caractéristique de l'invention on évalue le degré de périodicité $c_i$ pour la forme d'onde $wn_i$. Ceci est effectué au moyen d'une corrélation avec la précédente forme d'onde $wn_{i-1}$ déjà estimée :

$$c_i = \frac{\sum_{k=1}^{K} wn_i(k) \cdot wn_{i-1}(k)}{\sqrt{\sum_{k=1}^{K} wn_i(k)^2 \cdot \sum_{k=1}^{K} wn_{i-1}(k)^2}} \tag{6}$$

La restitution des formes d'ondes perdues par la réception de mauvaises trames se fait comme suit :

Soit j = i+1 ... i+Q (les mauvaises données correspondant à la durée des observations $O_{i+1}$ ... $O_Q$). On considère trois fonctions d'évolution f(), g() et h() qui permettent de former respectivement : la période estimée $T^{est}_j$, le degré de périodicité estimé $c^{est}_j$ et la forme d'onde estimée $wn^{est}_j$ selon les formules suivantes :

$$T^{est}_{\ j} = f(T_{j-L}, \cdots, T_{j-1}) \tag{7}$$

$$c^{est}_{\ j} = g(c_{j-L}, ..., c_{j-1}) \tag{8}$$

$$wn^{est}_{\ j} = h(wn_{j-L}, ..., wn_{j-1}) \tag{9}$$

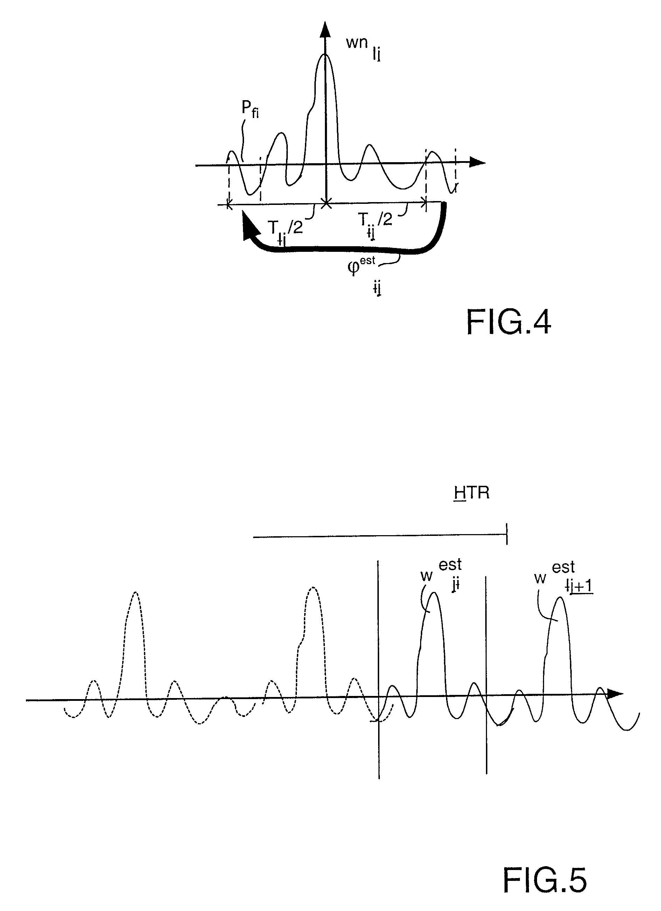

Pour avoir la forme d'onde reconstituée $w^{est}_j$ (voir la figure 4), on effectue une opération inverse de la normalisation temporelle :

$$w^{est}_{\ j}(k) = wn^{est}_{\ j}\left(\left(k - \frac{\varphi_j}{2\pi} \cdot T^{est}_{\ j} \cdot F_e\right) \cdot \frac{T_{\max}}{T^{est}_{\ j}}\right) \tag{10}$$

On rétablit le déphasage grâce au $\varphi^{est}_j$ pour que le raccord avec les formes d'ondes contenues dans la dernière trame reçue correctement (ou précédemment reconstituées) puisse se faire d'une manière continue.

C'est cette dernière forme d'onde ainsi estimée qui va servir à reconstituer la trame jugée mauvaise (signal BFR actif). La figure 5 montre comment la mauvaise trame est reconstituée. On reconstitue ces formes d'ondes $w^{est}_j$ autant de fois que nécessaire pour remplir les trames défectueuses.

Selon une caractéristique de l'invention, on ajoutera du bruit en fonction du facteur de corrélation précité.

Les différentes fonctions f() g () h() dont il a été question peuvent être de simples fonctions d'extrapolation. Ainsi par exemple pour la période $T_j$:

$$T_j = \frac{T_{j-1} \cdot (j-(j-2)) + T_{j-2} \cdot ((j-1)-j)}{(j-1)-(j-2)} = 2 \cdot T_{j-1} - T_{j-2} \tag{11}$$

## Revendications

1.  Appareil comportant un dispositif de réception pour recevoir des données, muni d'un dispositif de détection de mauvaises données pour fournir un signal indicateur de mauvaises données et d'un dispositif de reconstitution de données déclenché par ledit signal indicateur pour reconstituer les mauvaises données, **caractérisé en ce que** le dispositif de reconstitution comporte des moyens pour constituer des formes d'ondes à partir des données précédentes reçues et pour reconstituer des données manquantes par extrapolation desdites formes d'onde.

2.  Appareil selon la revendication 1 dont le dispositif de réception reçoit des données se présentant sous forme de trames pour lesquelles le signal indicateur de mauvaises données est actif pour une mauvaise trame, **caractérisé en ce que** le dispositif de reconstitution fournit des données reconstituées pour remplacer toute la trame déclarée mauvaise.

3. Appareil selon l'une des revendications 1 à 2, **caractérisé en ce que** lesdites formes d'ondes sont normalisées selon une durée de temps dite période de référence avant extrapolation et que la forme d'onde reconstituée est dé-normalisée en fonction d'une durée extrapolée.

4. Appareil selon l'une des revendications 1 à 3, **caractérisé en ce que** le dispositif de reconstitution comporte un additionneur de bruit dont la grandeur est basée sur le degré de corrélation entre les formes d'ondes déjà passées.

5. Appareil selon l'une des revendications 1 à 4, **caractérisé en ce que** la période de référence est basée sur la période des formes d'ondes la plus élevée possible.

6. Appareil selon l'une des revendications 1 à 5, **caractérisé en ce qu'**il satisfait aux normes GSM et/ou UMTS.

7. Procédé de reconstitution de données mis en oeuvre dans l'appareil selon l'une des revendications 1 à 6, **caractérisé en ce qu'**il comporte les étapes suivantes :

- emmagasinage d'un certain nombre de données,
- détermination de formes d'ondes basée sur ces données emmagasinées,
- détermination de la période de ces formes d'ondes,
- normalisation éventuelle sur une même période dite de référence de ces formes d'ondes,
- reconstitution de formes d'ondes établie par corrélation sur des formes d'ondes déjà établies, sur la base de la période de référence,
- reconstitution de la période des formes d'ondes reconstituées basée sur la période des formes d'ondes déjà établies,
- dé-normalisation des formes d'ondes reconstituées.
- remplacement de données défectueuses par les formes d'ondes reconstituées et dé-normalisées.

FIG.1

FIG.2

FIG.3

FIG.4

FIG.5

EP 1 217 613 A1

| Office européen des brevets | RAPPORT DE RECHERCHE EUROPEENNE | Numéro de la demande EP 01 20 4796 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 00 63881 A (AT & T CORP ;KAPILOW DAVID A (US)) 26 octobre 2000 (2000-10-26) * abrégé; figures 2,3,8,11 * * page 7, ligne 14-29 * | 1-3,5-7 | G10L19/00 |
| X | SANNECK H ET AL: "A NEW TECHNIQUE FOR AUDIO PACKET LOSS CONCEALMENT" GLOBAL TELECOMMUNICATIONS CONFERENCE (GLOBECOM),US,NEW YORK, IEEE, 18 novembre 1996 (1996-11-18), pages 48-52, XP000741671 ISBN: 0-7803-3337-3 * abrégé; figure 2 * | 1-3,5-7 | |
| X | GOODMAN D J ET AL: "WAVEFORM SUBSTITUTION TECHNIQUES FOR RECOVERTING MISSING SPEECH SEGMENTS IN PACKET VOICE COMMUNICATIONS" INTERNATIONAL CONFERENCE ON ACOUSTICS, SPEECH & SIGNAL PROCESSING. ICASSP,US,NEW YORK, IEEE, vol. CONF. 11, 7 avril 1986 (1986-04-07), pages 105-108, XP000615777 * abrégé * * page 107, colonne de gauche, alinéa 4 - colonne de droite, alinéa 2 * | 1-3,5-7 | DOMAINES TECHNIQUES RECHERCHES (Int.Cl.7) G10L |
| D,A | US 5 907 822 A (PRIETO JR) 25 mai 1999 (1999-05-25) * abrégé * | 1,2,7 | |

Le présent rapport a été établi pour toutes les revendications

| Lieu de la recherche | Date d'achèvement de la recherche | Examinateur |
| LA HAYE | 28 mars 2002 | Quélavoine, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

9

**ANNEXE AU RAPPORT DE RECHERCHE EUROPEENNE
RELATIF A LA DEMANDE DE BREVET EUROPEEN NO.**          EP 01 20 4796

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-03-2002

| Document brevet cité au rapport de recherche | | Date de publication | Membre(s) de la famille de brevet(s) | | Date de publication |
|---|---|---|---|---|---|
| WO 0063881 | A | 26-10-2000 | EP | 1086451 A1 | 28-03-2001 |
| | | | EP | 1088301 A1 | 04-04-2001 |
| | | | EP | 1088302 A1 | 04-04-2001 |
| | | | EP | 1086452 A1 | 28-03-2001 |
| | | | EP | 1088303 A1 | 04-04-2001 |
| | | | WO | 0063881 A1 | 26-10-2000 |
| | | | WO | 0063882 A1 | 26-10-2000 |
| | | | WO | 0063883 A1 | 26-10-2000 |
| | | | WO | 0063884 A1 | 26-10-2000 |
| | | | WO | 0063885 A1 | 26-10-2000 |
| US 5907822 | A | 25-05-1999 | AUCUN | | |

EPO FORM P0460

Pour tout renseignement concernant cette annexe : voir Journal Officiel de l'Office européen des brevets, No.12/82